# EUROPEAN PATENT APPLICATION

(11) **EP 4 775 043 A1**
(43) Date of publication of application: **15.07.2026**
(21) Application number: 25226722.4
(22) Date of filing: 23.12.2025
(51) Int. Cl.: A23G 9/28

(54) **METHOD FOR PRODUCING AN ICE CREAM PRODUCT**

(30) Priority: 10.01.2025 IT 202500000309
(71) Applicant: Finishing Group S.r.l., 21047 Saronno (VA) (IT); Simeone, Attilio Maitan, 20816 Ceriano Laghetto (MB) (IT)
(72) Inventor: Maitan, Simeone Attilio, 20816 Ceriano Laghetto (MB) (IT)
(74) Representative: Lunati & Mazzoni S.r.L.

(57) **Abstract**

A method for producing an ice cream product is provided, implemented by a device (1) comprising a casing (2) defining a main axis (2a) and including walls (20) extending around the main axis (2a), a bottom (21) extending transversely to the main axis (2a) at one end of the walls (20), and an opening (22) delimited by the walls (20) at an end of the walls (20) opposite the bottom (21); a tray (3) housed in the casing (2) and extending transversely to the main axis (2a) so as to be overlayed on the bottom (21); and constraining means (4) mutually constraining the tray (3) and the casing (2) in such a way that the tray (3) is movable relative to the casing (2) along the main axis (2a) so that the tray (3) can define a retracted configuration in which it is adjacent to the bottom (21), and at least one extracted configuration in which it is spaced from the bottom (21); comprising, when the tray (3) is in the retracted configuration, inserting a first wafer (10) into the casing (2) resting on the tray (3); overlaying on the first wafer (10) at least one layer (11) of ice cream in the casing (2); inserting a second wafer (12) into the casing (2) resting on the layer (11) so as to form a sandwich-type ice cream product (100) in the casing (2); pressing the product (100), starting from the second wafer (12), parallel to the main axis (2a) on the tray (3); and extracting the product (100) from the casing (2) by moving the tray (3) along the main axis (2a) from the retracted configuration to the extracted configuration.

## Description

The present invention relates to a method for producing an ice cream product of the type specified in the preamble of the first claim.

**In** particular, the present invention relates to a method, usable in the artisanal sector, for producing a confectionery product consisting specifically of an ice cream sandwich, that is, an ice cream comprising two wafers enclosing a layer of ice cream.

As is known, the ice cream sandwich is a frozen confectionery product composed of two wafers enclosing a layer of ice cream. The ice cream may be of any flavour, possibly homogeneous or even heterogeneous, exhibiting different stratifications of ice cream.

Furthermore, the wafers may comprise biscuit with or without sweet coatings, for example chocolate, or wafer sheets or other similar edible products.

Normally, the production method provides that the ice cream is manually layered on the wafer and that, once one or more layers of ice cream have been formed, a further wafer is positioned on top of the product to complete the ingredients.

However, the ice cream sandwich is a compact product. **In** fact, after placing the additional wafer, the two wafers are normally compressed so as to make the ice cream as compact as possible.

The known technique described includes some important drawbacks.

**In** particular, especially but not exclusively when the above method is carried out at an artisanal level, during compression the layer of ice cream may expand radially at the point of application of the compression, deforming and overflowing from the wafers.

In addition, the compression may damage the wafers, at least externally, since it is often performed manually and thus involves irregularities that result in surface defects that are at least visually displeasing.

In this situation, the technical task underlying the present invention is to devise a method for producing an ice cream product capable of substantially overcoming at least part of the drawbacks mentioned.

Within said technical task, an important object of the invention is to provide a method for producing an ice cream product, in particular an ice cream sandwich, which is compact while maintaining the desired shape.

Another important object of the invention is to provide a method for producing an ice cream product that prevents surface damage to the wafers, keeping the aesthetic appeal of the product intact.

The technical task and the specified objects are achieved by a method for producing an ice cream product as claimed in the appended claim 1.

Preferred technical solutions are highlighted in the dependent claims.

The features and advantages of the invention will be clarified below by the detailed description of preferred embodiments of the invention, with reference to the accompanying drawings, in which:
la **Fig. 1** shows an axial sectional view of a device for producing an ice cream product implementing a method for producing an ice cream product according to the invention, in which the step of inserting the first wafer into the casing is shown;
la **Fig. 2** illustrates an axial sectional view of the device of Fig. 1 in which the step of overlaying the ice cream layer on the first wafer in the casing is shown;
la **Fig. 3** is an axial sectional view of the device of Figs. 1-2 in which the step of inserting the second wafer on the ice cream layer in the casing to perform the compression and obtain the ice cream product is shown; and
la **Fig. 4** represents an axial sectional view of the device of Figs. 1-3 in which the step of extracting the ice cream product from the casing is shown.

In the present document, measurements, values, shapes and geometric references (such as perpendicularity and parallelism), when associated with words such as "about" or other similar terms such as "approximately" or "substantially", are to be understood as within measurement errors or imprecisions due to production and/or manufacturing errors and, above all, as within a slight deviation from the value, measurement, shape or geometric reference with which they are associated. For example, such terms, when associated with a value, preferably indicate a deviation not exceeding 10% of the value itself.

Furthermore, when used, terms such as "first", "second", "upper", "lower", "main" and "secondary" do not necessarily identify an order, a priority of relationship or relative position, but may simply be used to distinguish more clearly between different components.

Unless otherwise specified, as appears from the following discussions, terms such as "processing", "computing", "determination", "calculation", or similar, are considered to refer to the action and/or processes of a computer or similar electronic computing device that manipulates and/or transforms data represented as physical quantities, such as electronic magnitudes in registers of a computing system and/or memories, into other data similarly represented as physical quantities within computing systems, registers or other memory, transmission or information display devices.

The measurements and data reported in the present text are to be considered, unless otherwise indicated, as carried out in International Standard Atmosphere ICAO (ISO 2533:1975).

With reference to the Figures, the method for producing an ice cream product according to the invention is implemented by a device for producing an ice cream product globally indicated by the numeral **1.**

The ice cream product **100** is substantially an ice cream sandwich. Therefore, the ice cream product 100 defines a sandwich structure, that is, a multilayer structure in which multiple layers are mutually overlayed.

In particular, preferably, the ice cream product 100 comprises at least a first wafer **10,** at least one layer **11** of ice cream and a second wafer **12.**

The at least one layer 11 is interposed between first and second wafer 10, 12. The latter, therefore, comprise the layer 11 and delimit it externally.

Preferably, first and second wafer 10, 12 are more rigid than the layer 11. They may comprise biscuit, or wafer sheets, or other similar edible material.

The layer 11 preferably includes an ice cream product. The flavour of the ice cream may be any. In addition, the ice cream product 100 may also include a plurality of different layers 11.

The layers 11 may be arranged between first wafer 10 and second wafer 12 mutually side by side, similarly to what occurs in common ice cream sandwiches such as the well-known Cucciolone^{™}.

Alternatively, the layers 11 may be mutually overlayed between first and second wafer 10, 12.

The device 1 is suitable for enabling the production of the ice cream product 100 just described.

In particular, the device 1 comprises at least one casing **2.**

The casing 2 is a box-like element suitably open on only one face. Therefore, it defines a housing inside which the ice cream product 100 can be formed.

The casing 2 defines a main axis **2a.**

The main axis 2a is, for example, a barycentric axis, optionally a central axis.

Therefore, the casing 2 comprises walls **20,** a bottom **21** and an opening **22.** In particular, the casing 2 defines a chamber delimited by the walls 20 and the bottom 21. The walls 20 are preferably arranged so as to define a closed lateral surface of the casing 2. It is specified that the expression "closed surface" identifies the fact that the walls 20 are arranged so that, if intersected by a plane transverse to the axis 2a and thus to the walls 20, they define a closed broken line and/or a circular line. The walls 20 may therefore identify the lateral surfaces of, for example, a solid of revolution or a polygonal solid.

The walls 20 preferably extend around the main axis 2a. They may be separate or made in one piece. The bottom 21 extends transversely, specifically perpendicularly, to the main axis 2a at one end of the walls 20. Therefore, walls 20 and bottom 21 define the overall shape of the casing 2

For example, the casing 2 may define a cylindrical shape having as its axis the main axis 2a. Thus, the walls 20 may be in one piece and extend along an annular surface, and the bottom 21 may have a circular shape. Alternatively, the bottom 21 may define other squared geometric shapes such as, for example, quadrangular shapes; and the walls 20 may extend transversely from the bottom 21 starting from each side.

In any case, the opening 22 is delimited by the walls 20 at an end of the walls 20 opposite the bottom 21. The opening 22 is substantially the section/face of the casing 2 from which the housing of the casing 2 may be accessed.

Therefore, the casing 2 may be loaded with the ingredients of the ice cream product 100 starting from the opening 22.

The device 1 thus also comprises a tray **3.**

The tray 3 is housed in the casing 2. In addition, the tray 3 extends transversely to the main axis 2a. Therefore, the tray 3 is delimited by the walls 20 so as to be overlayed on the bottom 21. In other words, the tray 3 preferably defines a shape similar to the bottom 21, but is contained in the casing 2 and movable relative to it as better specified below. Naturally, the tray 3 may also have shapes different from the bottom 21 and be strictly inscribed within it, even dimensionally reduced in a transverse plane, specifically perpendicularly, to the main axis 2a with respect to the bottom 21.

In fact, the device 1 also comprises constraining means **4.**

The constraining means 4 mutually constrain tray 3 and casing 2. In particular, advantageously, the constraining means 4 establish a constraint such that the tray 3 is integral with the casing 2 transversely to the main axis 2a.

In addition, the constraining means 4 define a loose constraint such that the tray 3 is movable relative to the casing 2 along the main axis 2a.

Therefore, thanks to the constraining means 4, the tray 3 may define a retracted configuration in which it is adjacent and specifically in contact with the bottom 21, and at least one extracted configuration in which it is spaced from the bottom 21. Naturally, the tray 3 defines a plurality of different extracted configurations, including at least one limit configuration in which the tray 3 substantially reaches the opening 22.

From a structural point of view, the constraining means 4 may be implemented in different ways.

Essentially, the casing 2 and the tray 3 may implement the constraining means 4 especially if the tray 3 is shaped like the bottom 21 and, therefore, also like the walls 20.

Thus, the bottom 21 may comprise a hole, for example centred with respect to the main axis 2a, through which to push the tray 3 to move it from the bottom 21, for example with a finger.

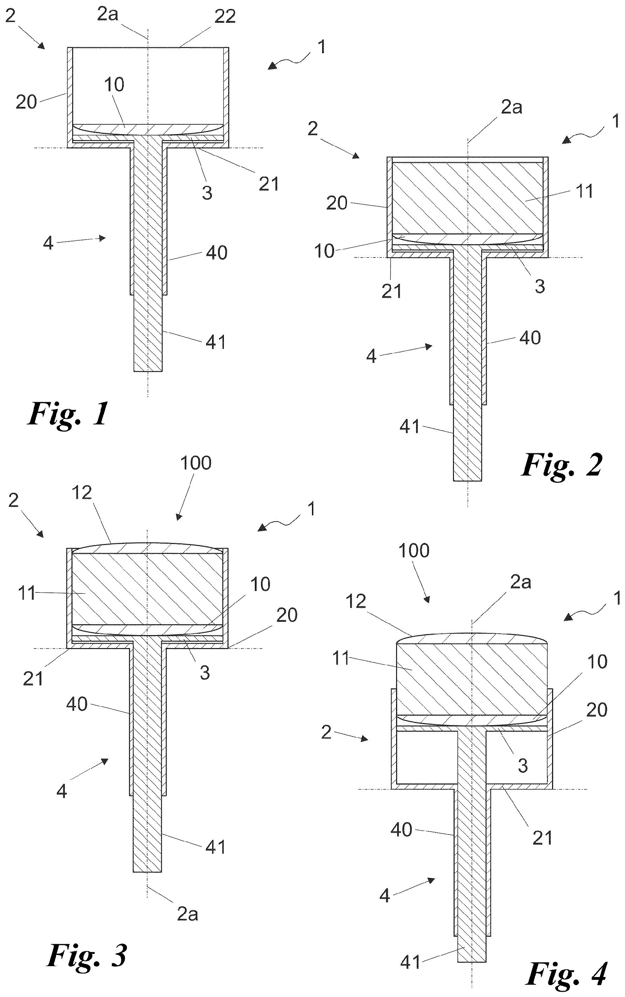

Alternatively, in a preferred embodiment shown in Figs. 1-4, the constraining means 4 may comprise a tubular body **40** and a plunger **41.**

The tubular body 40 is, if present, preferably constrained, suitably integrally, to the bottom 21. In addition, the tubular body 40 is in communication with the interior of the casing 2, that is, with the housing in which the tray 3 is located and in which the ice cream product 100 is obtained. In this regard, obviously, the bottom 21 may comprise a hole communicating with the tubular body 40.

The advantage of this embodiment is given by the fact that the tubular body 40 allows the user to grip the device 1 during the filling of the casing 2 similarly to what happens for an ice cream cone. Naturally, nothing prevents actuating the plunger 41 mechanically and thus providing a tubular body 40 constrained to a fixed structure.

Therefore, the plunger 41 may be integral with the tray 3. In addition, the plunger 41 is movably constrained in the tubular body 40 so that it can move along the main axis 2a.

The movement may be carried out by manipulating an end of the plunger 41 opposite the tray 3 and, for example, protruding from the tubular body 40.

In even greater detail, the plunger 41 may be exclusively sliding in the tubular body 40 and the manipulation may be carried out by pushing the end of the plunger 41. Alternatively, the tubular body 40 and the plunger 41 may be coupled by means of a thread so as to form a worm screw. Thus, in this latter case, the manipulation may be carried out by rotating around the main axis 2a the plunger 41 with respect to the tubular body 40.

In a further embodiment of the constraining means 4, not shown in the figures, the walls 20 may comprise one or more guides. The guides may be slots preferably extending parallel to the main axis 2a and suitably passing through the walls 20. Thus, the constraining means 4 may comprise one or more knobs external to the casing 2 and integrally constrained to the tray 3 through said guides so that each knob protrudes from the respective guide, allowing the movement of the tray 3 from outside the casing 2. In this case, the bottom 21 preferably does not comprise any hole and is therefore entirely closed.

The operation of the device 1 for producing an ice cream product previously described in structural terms enables the implementation, as stated, of a new method for producing an ice cream product.

The method comprises, in broad terms, at least one insertion step.

In the insertion step, preferably a first wafer 10 is inserted into the casing 2 resting on the tray 3

In addition, the method comprises a overlaying step.

In the overlaying step, preferably at least one layer 11 of ice cream is overlayed on the first wafer 10 in the casing 2. This step substantially corresponds to a filling of the interior of the casing 2 with at least one layer 11, which may be formed, for example, with an ice cream spatula.

As already mentioned, in the overlay a plurality of layers 11 may be overlayed on the first wafer 10.

For example, the layers 11 may be overlayed on the first wafer 10 mutually side by side so as to be distributed on the first wafer 10 transversely to the main axis 2a. Alternatively or additionally, the layers 11 may be overlayed on the first wafer 10 mutually overlapping along the main axis 2a so as to be distributed on the first wafer 10 parallel to the main axis 2a.

The method thus comprises an additional insertion step.

In the additional insertion step, a second wafer 12 is inserted into the casing 2 resting on the layer 11, which is thus enclosed between the two wafers 10 and 12. In this way, the sandwich-type ice cream product 100 is formed in the casing 2. Thus, the method preferably comprises a compression step.

In the compression step, the product 100 is compressed, starting from the second wafer 12, parallel to the main axis 2a on the tray 3. Naturally, the compression may be minimal, just sufficient to bind the wafers 10, 12 to the one or more layers 11 comprised between them.

Advantageously, additionally, the method comprises an extraction step.

In the extraction step, preferably, the product 100 is extracted from the casing 2 by moving the tray 3 along the main axis 2a from the retracted configuration to the extracted configuration.

As already mentioned, such extraction may comprise manipulating an end of the plunger 41 opposite the tray 3. In even greater detail, the manipulation may be carried out by pushing or rotating around the main axis 2a the end of the plunger 41 with respect to the tubular body 40.

The above steps described are preferably carried out in the order in which they are presented.

Naturally, once the tray 3 has been returned to the retracted configuration, it is possible to repeat the method to produce additional ice cream products 100.

Thus, the invention also comprises a device 1 as previously described when used to implement the method just described.

Consequently, the invention also comprises a new use of the device 1, as described above, to produce an ice cream product.

The device for producing an ice cream product and therefore the method for producing an ice cream product according to the invention achieve important advantages.

In fact, the device and the method for producing an ice cream product make it possible to obtain a compact product, maintaining the desired shape.

Furthermore, the method for producing an ice cream product makes it possible to avoid surface damage to the wafers, keeping the aesthetic appeal of the product intact.

The invention is susceptible to variants falling within the scope of the inventive concept defined by the claims.

Within this scope, all details may be replaced with equivalent elements and the materials, shapes and dimensions may be of any type.

## Claims

1. Process for producing an ice cream product (100) **characterized in that it** comprises:
- the fact of being implemented by a device (1) to make said ice cream product (100) comprising:
- a casing (2) defining a main axis (2a) and including:
- walls (20) developed around said main axis (2a),
- a bottom (21) developing transversely to said main axis (2a) at one end of said walls (20), and
- an opening (22) bounded by said walls (20) at one end of said walls (20) opposite said bottom (21),
- a tray (3) housed in said casing (2) and developing transversely to said main axis (2a) overlayed on said bottom (21), and
- constraining means (4) mutually constraining said tray (3) and said casing (2) in such a way that said tray (3) is movable relative to said casing (2) along said main axis (2a) so that said tray (3) can define a retracted configuration in which it is adjacent to said bottom (21), and at least one extracted configuration in which it is spaced from said bottom (21);
said implementation process being further **characterized in that** it includes, when said tray (3) is in retracted configuration:
- inserting a first wafer (10) into said casing (2) resting on said tray (3);
- overlaying on said first wafer (10) at least one layer (11) of ice cream in said casing (2);
- inserting a second wafer (12) into said casing (2) resting on said layer (11) so as to form a sandwich-type ice cream product (100) in said casing (2);
- pressing said ice cream product (100), starting from said second wafer (12), parallel to said main axis (2a) on said tray (3); and
- extracting said ice cream product (100) from said casing (2) by moving said tray (3) along said main axis (2a) from said retracted configuration to said extracted configuration.

2. Process according to claim 1, wherein said constraining means (4) comprise a tubular body (40) constrained to said bottom (21) in communication with the interior of said casing (2) developing along said main axis (2a) and a plunger (41) integral with said tray (3) and movably constrained in said tubular body (40) so as to define a movement of said plunger (41) and thus said tray (3) along said main axis (2a), and said movement includes a manipulation of one end of said plunger (41) opposite said tray (3).

3. Process according to the preceding claim, wherein said plunger (41) is exclusively sliding in said tubular body (40) and said manipulation is accomplished by pushing said end of said plunger (41).

4. Process according to claim 2, wherein said plunger (41) and said tubular body (40) are coupled by means of a thread in such a way as to make a worm screw, and said manipulation is accomplished by rotating around said main axis (2a) said end of said plunger (41) with respect to said tubular body (4).

5. Process according to any previous claim, wherein in said overlay a plurality of said layers (11) are overlayed on said first wafer (10).

6. Process according to the preceding claim, wherein said layers (11) are overlayed on said first wafer (10) mutually side by side in such a way that they are distributed on said first wafer (10) transversely to said main axis (2a).

7. Process according to any of claims 5-6, wherein said layers (11) are overlayed on said first wafer (10) mutually overlapping along said main axis (2a) in such a way that they are distributed on said first wafer (10) parallel to said main axis (2a).

8. Process according to any of the preceding claims, wherein said casing (2) is cylindrical.

9. Device (1) for producing an ice cream product **characterized in that** it implements a process for producing an ice cream product according to any of the preceding claims.

10. Use of a device (1) for producing an ice cream product (100) **characterized in that** said device (1) comprises:
- a casing (2) defining a main axis (2a) and including:
- walls (20) developed around said main axis (2a),
- a bottom (21) developing transversely to said main axis (2a) at one end of said walls (20), and
- an opening (22) bounded by said walls (20) at one end of said walls (20) opposite said bottom (21),
- a tray (3) housed in said casing (2) and developing transversely to said main axis (2a) delimited by said walls (20) so as to be overlayed on said bottom (21), and
- means of constraint (4) mutually constraining said tray (3) and said casing (2) in such a way that said tray is integral with said casing (2) transversely to said main axis (2a) and is movable relative to said casing (2) along said main axis (2a) in such a way that said tray (3) can define:
- a retracted configuration in which said tray (3) is adjacent to said bottom (21), and
- at least one extracted configuration in which said tray (3) is moved away from said bottom (21).
